# EUROPEAN PATENT APPLICATION

(11) **EP 3 345 790 A1**
(43) Date of publication of application: **11.07.2018**
(21) Application number: 16841721.0
(22) Date of filing: 26.08.2016
(51) Int. Cl.: B60R 1/06, G01B 21/00

(54) **VIEW CONTROL DEVICE FOR VEHICLE**

(30) Priority: 01.09.2015 JP 2015172304
(71) Applicant: Kabushiki Kaisha Tokai Rika Denki Seisakusho, Ohguchi-cho Niwa-gun Aichi 480-0195 (JP)
(72) Inventor: MIYAZAKI, Shinichi, Niwa-gun Aichi 480-0195 (JP); NAGAO, Takashi, Niwa-gun Aichi 480-0195 (JP)
(74) Representative: TBK
(86) International application number: PCT/JP2016/074995
(87) International publication number: WO 2017/038689

(57) **Abstract**

A vehicular visual recognition control device includes an in-out sensor (24) that detects a vehicle in-out direction position of a mirror surface of a vehicle door mirror device for visually recognizing vehicle surroundings, an up-down sensor (26) that detects a vehicle up-down direction position of the mirror surface of the vehicle door mirror device, and a noise correction section (62) that, when a mirror surface position is detected using the in-out sensor (24), detects noise based on a detection result from the up-down sensor (26) and corrects a detection result from the in-out sensor.

## Description

### Technical Field

The present invention relates to a vehicular visual recognition control device to control a visual recognition section, such as a door mirror or camera, for visual recognition of vehicle surroundings.

### Background Art

Visual recognition sections, such as mirror surfaces or cameras, are provided at vehicles for visual recognition of vehicle surroundings. The range of visual recognition of such visual recognition sections can be changed by, for example, changing the position of the mirror surface, changing an imaging direction by moving the camera, or the like.

For example, Japanese Utility Model Application Laid-Open (JP-U) No. H06-23829 proposes a vehicle rearview mirror device that includes a mirror drive mechanism for moving a rearview mirror in various directions in coordination with directional indicators and the steering wheel.

Sensors for detecting the position of a visual recognition section, such as a mirror surface or a camera, are sometimes provided in order to change the position of a mirror surface or an imaging direction.

However, noise due to vibration or electrical noise may be added onto detection values of a sensor provided at a vehicle, such as a sensor that detects the position of a visual recognition section, and so various technology has been proposed to reduce the effects of noise.

For example, Japanese Patent Application Laid-Open (JP-A) No. 2001-004978 proposes computing, based on a rate of acceleration along a front-rear direction, a correction amount for a detection value from a depression force sensor that detects depression force on a brake pedal, and removing vibration noise therewith.

### SUMMARY OF INVENTION

### Technical Problem

However, since in order to remove any sensor noise, in JP-A No. 2001-004978 it is necessary to provide a noise-detecting sensor, there is thus room for improvement.

In consideration of the above circumstances, an object of the present invention is to suppress the effect of noise so as to accurately detect a position of a visual recognition section without providing a dedicated noise-detecting sensor.

### Solution to Problem

In order to achieve the above object, a first aspect of the present disclosure includes: plural detection sections that detect a position of visual recognition sections for visually recognizing vehicle surroundings; and a correction section that, when employing any one of the plural detection sections to detect a position of the visual recognition sections, detects noise based on a detection result from the detection sections not being employed from among the plural detection sections and is configured to correct a detection result from the detection section being employed.

According to the first aspect of the present disclosure, a position of the visual recognition sections for visually recognizing vehicle surroundings is detected in the plural detection sections. For example, a detection section that detects a vehicle up-down direction position of the visual recognition sections and a detection section that detects a vehicle in-out direction position of the visual recognition sections may be applied as the detection sections.

In the correction section, when employing any one of the plural detection sections to detect a position of the visual recognition sections, noise is detected based on a detection result from the detection sections not being employed from among the plural detection sections and a detection result from the detection section being employed is corrected. Namely, since noise due to running vibrations in the vehicle or the like is superimposed onto each of the plural detection sections, noise is detected from the detection sections not being employed. Using the detected noise to correct the detection result from the detection section being employed enables accurate detection of a position of the visual recognition sections.

Note that as in a second aspect of the present disclosure, the plural detection sections may include a right-side up-down detection section that detects a vehicle up-down direction position of one of the visual recognition sections which is provided at a vehicle right side, a right-side in-out detection section that detects a vehicle in-out direction position of the visual recognition section provided at the vehicle right side, a left-side up-down detection section that detects a vehicle up-down direction position of one of the visual recognition sections which is provided at a vehicle left side, and a left-side in-out detection section that detects a vehicle in-out direction position of the visual recognition section provided at the vehicle left side. In addition, when detecting a position of the visual recognition sections using the right-side in-out detection section, the correction section may detect noise based on a detection result from the right-side up-down detection section and correct a detection result from the right-side in-out detection section, and when detecting a position of the visual recognition sections using the left-side in-out detection section, the correction section may detect noise based on a detection result from the left-side up-down detection section and correct a detection result from the left-side in-out detection section.

Further, as in a third aspect of the present disclosure, the plural detection sections may include a right-side up-down detection section that detects a vehicle up-down direction position of one of the visual recognition sections which is provided at a vehicle right side, a right-side in-out detection section that detects a vehicle in-out direction position of the visual recognition section provided at the vehicle right side, a left-side up-down detection section that detects a vehicle up-down direction position of one of the visual recognition sections which is provided at a vehicle left side, and a left-side in-out detection section that detects a vehicle in-out direction position of the visual recognition section provided at the vehicle left side. In addition, when detecting a position of the visual recognition section provided at the right side, the correction section may detect noise based on at least one of the left-side up-down detection section or the left-side in-out detection section and correct a detection result from the detection section detecting the position of the visual recognition section provided at the right side, and when detecting a position of the visual recognition section provided at the left side, the correction section may detect noise based on at least one of the right-side up-down detection section or the right-side in-out detection section and correct a detection result from the detection section detecting the position of the visual recognition section provided at the left side.

Further, as in a fourth aspect of the present disclosure, to correct a detection result of the detection section being employed, the correction section may subtract a detection result from the detection sections not being employed from the detection result from the detection section being employed in cases in which fluctuation is present in detection results from the detection sections not being employed, increase a number of samples of a moving average of detection results from the detection section being employed in cases in which fluctuation is present in detection results from the detection sections not being employed, or detect a noise frequency in a detection result from the detection sections not being employed, and remove a detected frequency component from the detection result of the detection section being employed.

Further, as in a fifth aspect of the present disclosure, the vehicular visual recognition control device may further include a change section, a controller, and a prediction section. The change section changes the position of the visual recognition sections. The controller, in cases in which a predetermined condition for changing the position of one of the visual recognition sections has been satisfied, controls the change section so as to change the position of the one of the visual recognition sections to a predetermined target position based on a detection result from the detection sections. The prediction section, in cases in which noise detected by the correction section is a specific value or greater, predicts an arrival time at the target position and predicts a position of the visual recognition section based on the predicted arrival time without the correction section performing a correction.

### Advantageous Effects of Invention

The present invention as described above has the advantageous effect of enabling the effect of noise to be suppressed so as to accurately detect a position of a visual recognition section without providing a dedicated noise-detecting sensor.

### BRIEF DESCRIPTION OF DRAWINGS

Fig. 1 is an external view of a vehicle door mirror device subject to control by a door mirror control device according to an exemplary embodiment of the present invention.
Fig. 2 is a cross-section (cross-section taken along line 2-2 in Fig. 1) of relevant portions of a vehicle door mirror device as viewed from above in a vehicle up-down direction (from above a vehicle).
Fig. 3 is a block diagram illustrating configuration of a control system of a vehicle door mirror control device according to an exemplary embodiment.
Fig. 4 is a diagram to explain turning-coordinated mirror control.
Fig. 5 is a diagram illustrating a manner in which a region of a visual recognition range is changed according to a turning amount.
Fig. 6 is a functional block diagram illustrating functionality of an ECU to correct sensor detection values.
Fig. 7 is a flowchart illustrating an example of a flow of processing performed by an ECU of a vehicle door mirror control device according to an exemplary embodiment.
Fig. 8 is a flowchart illustrating a flow of mirror surface position detection processing performed by an ECU 12 when detecting the position of a mirror surface in a vehicle door mirror control device according to an exemplary embodiment.
Fig. 9 is a flowchart illustrating a modified example of a flow of mirror surface position detection processing performed by an ECU when detecting the position of a mirror surface in a vehicle door mirror control device according to an exemplary embodiment.

### DESCRIPTION OF EMBODIMENTS

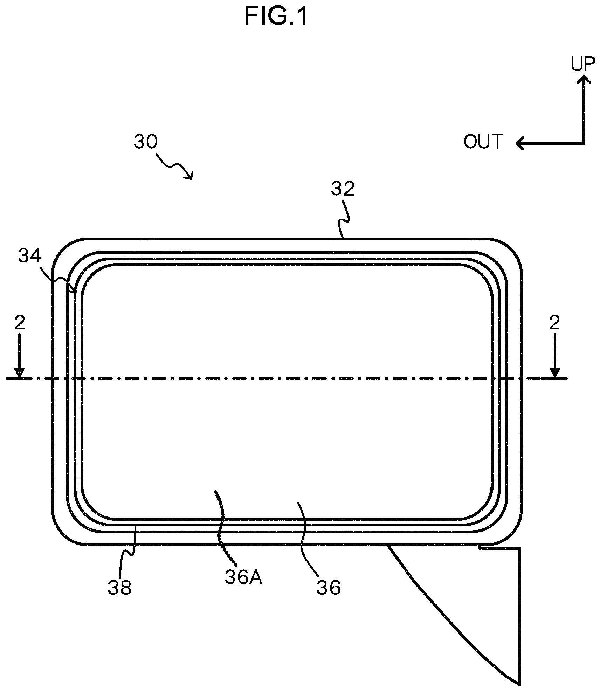

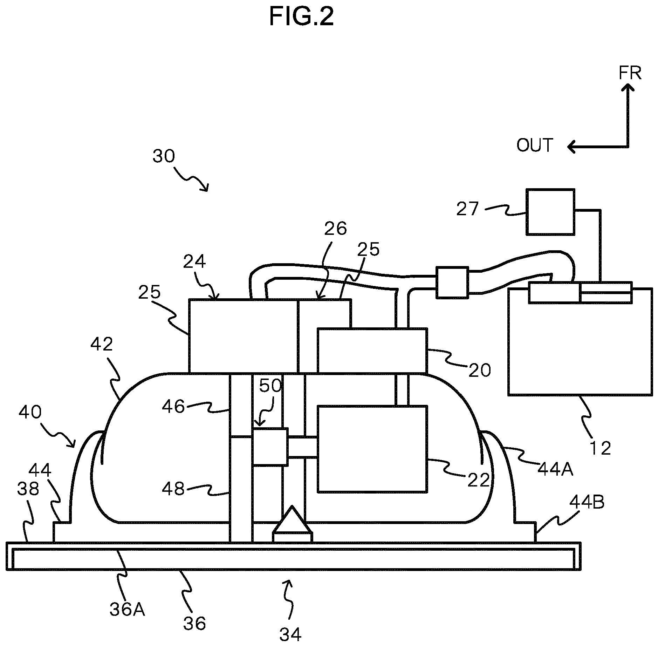

Detailed description follows regarding an example of an exemplary embodiment of the present invention, with reference to the drawings. Note that the following is a description of a vehicle door mirror control device, which serves as an example of a vehicular visual recognition control device of the present invention. Fig. 1 is an external view of a vehicle door mirror device subject to control by a door mirror control device according to the exemplary embodiment of the present invention. Fig. 2 is a cross-section (cross-section taken along line 2-2 in Fig. 1) of relevant portions of a vehicle door mirror device as viewed from above in a vehicle up-down direction (from above a vehicle). Note that in the drawings, arrow FR indicates the front of the vehicle, arrow OUT indicates a vehicle width direction outside (vehicle left side), and arrow UP indicates upward.

A vehicle door mirror device 30 is installed at a front end outer side of an up-down direction intermediate portion of a door (front door) of a vehicle.

As illustrated in Fig. 1, the vehicle door mirror device 30 includes a visor 32 having a substantially cuboidal-container shape and serving as an outer peripheral member. A vehicle width direction inside portion of the visor 32 is supported by the door (vehicle body side), thus installing the vehicle door mirror device 30 to the door. The inside of the visor 32 is open toward the vehicle rear side.

A substantially rectangular plate shaped mirror 34 is provided inside the visor 32. The mirror 34 is disposed in the open portion of the visor 32. A mirror body 36 (specular body) is provided at a vehicle rear side portion of the mirror 34, and a vehicle rear side face of a reflective film configures a mirror surface 36A of the mirror body 36. Namely, vehicle surroundings can be checked using the mirror surface 36A, which serves as a visual recognition section. The vehicle front side and outer periphery of the mirror body 36 is covered by a mirror holder 38 (mirror holder outer).

As illustrated in Fig. 2, an electric mirror surface adjuster unit 40 is provided inside the visor 32.

A substantially hemispherical container shaped case 42 is provided at a vehicle front side portion of the mirror surface adjuster unit 40. The inside of the case 42 is open on the vehicle rear side. The case 42 is supported by the visor 32, and the mirror surface adjuster unit 40 is thereby supported by the visor 32.

A tilting body 44 (mirror holder inner) is provided at a vehicle rear side portion of the mirror surface adjuster unit 40. The tilting body 44 is retained on the case 42 such that the tilting body 44 is capable of tilting (swinging, pivoting). A substantially cylindrical shaped slide tube 44A is provided on the tilting body 44. The slide tube 44A becomes gradually smaller in diameter on progression toward the vehicle front side, and is slidable against a peripheral wall of the case 42. A substantially circular disk shaped mounting plate 44B is integrally provided at the vehicle rear side end of the slide tube 44A. The mirror holder 38 of the mirror 34 is detachably mounted at the vehicle rear side of the mounting plate 44B. The mirror 34 is thereby able to tilt with respect to the case 42, as a single unit together with the tilting body 44, about a center of gravity position (face center position of the mirror surface 36A).

An up-down motor (not illustrated in the drawings) and an in-out motor 22, serving as a change section, are fixed inside the case 42. A rod shaped up-down rod (not illustrated in the drawings) and an in-out rod 48 are connected to the up-down motor and the in-out motor 22, respectively, through a gear mechanism 50, serving as a mechanical mechanism. The up-down rod and the in-out rod 48 are retained so as to be capable of sliding (moving) in a vehicle front-rear direction (axial direction) inside the case 42. The leading end (vehicle rear side end) of the up-down rod is pivotally retained on the mounting plate 44B below (or alternatively above) the center of gravity position of the mirror 34. The leading end (vehicle rear side end) of the in-out rod 48 is pivotally retained on the mounting plate 44B at the vehicle width direction outside (or alternatively at the vehicle width direction inside) of the center of gravity position of the mirror 34.

The up-down motor and the in-out motor 22 are electrically connected to an ECU 12 (mirror ECU), serving as a controller, through a mirror surface driver 20. The ECU 12 is provided inside the visor 32 or on the vehicle body side, and an adjustment operation device 27 is electrically connected to the ECU 12. When the adjustment operation device 27 is operated by a vehicle occupant (in particular by the driver), the mirror surface adjuster unit 40 is actuated by control from the ECU 12, and the up-down rod and the in-out rod 48 are slid in the vehicle front-rear direction by driving the up-down motor and the in-out motor 22, tilting the tilting body 44 and the mirror 34 with respect to the case 42. Thereby, the tilt position of the mirror 34 is adjusted, and the angle of the mirror surface 36A of the mirror 34 (the direction the mirror surface 36A faces) is adjusted.

When the up-down rod is slid toward the vehicle rear, the tilting body 44 and the mirror 34 are tilted up (in an upward facing direction), and the mirror surface 36A of the mirror 34 is tilted in an upward facing direction. When the up-down rod is slid toward the vehicle front, the tilting body 44 and the mirror 34 are tilted down (in a downward facing direction), and the mirror surface 36A of the mirror 34 is tilted in a downward facing direction. When the in-out rod 48 is slid toward the vehicle front, the tilting body 44 and the mirror 34 are tilted out (in an outward facing direction), and the mirror surface 36A of the mirror 34 is tilted in an outward facing direction of the vehicle width direction. When the in-out rod 48 is slid toward the vehicle rear, the tilting body 44 and the mirror 34 are tilted inward (in an inward facing direction), and the mirror surface 36A of the mirror 34 is tilted in an inward facing direction of the vehicle width direction.

As illustrated in Fig. 2, an up-down sensor 26 and an in-out sensor 24, serving as plural detection sections, are provided at the case 42. The up-down sensor 26 and the in-out sensor 24 are each electrically connected to the ECU 12. A substantially cuboidal-box shaped housing 25 is provided at each of the up-down sensor 26 and the in-out sensor 24. The up-down sensor 26 and the in-out sensor 24 are fixed to the case 42 by the housing 25 being fixed to the outside of the bottom wall of the case 42.

Rod shaped detection rods 46 are provided in the housing 25 so as to be slidable in the vehicle front-rear direction (axial direction). The detection rods 46 project out from the housing 25 toward the vehicle rear side and are biased toward the vehicle rear side. The detection rods 46 are inserted into the case 42 so as to penetrate through the bottom wall of the case 42. The detection rods 46 of the up-down sensor 26 and the in-out sensor 24 are coaxially disposed at the vehicle front side of the up-down rod and the in-out rod 48, respectively. Due to biasing force, the leading ends (vehicle rear side ends) of the detection rods 46 of the up-down sensor 26 and the in-out sensor 24 make contact with the base ends (vehicle front side ends) of the up-down rod and the in-out rod 48, respectively. The detection rods 46 of the up-down sensor 26 and the in-out sensor 24 are always capable of sliding in the vehicle front-rear direction as single bodies together with the up-down rod and the in-out rod 48, respectively. Thus, by the up-down sensor 26 and the in-out sensor 24 detecting the slide position of the respective detection rods 46 in the vehicle front-rear direction, the up-down sensor 26 and the in-out sensor 24 detect the respective slide positions of the up-down rod and the in-out rod 48 in the vehicle front-rear direction, thereby detecting the tilt position of the mirror 34 in the up-down direction and the in-out direction. Specifically, the up-down sensor 26 and the in-out sensor 24 are each equipped with a sliding resistance R, and the tilt position of the mirror 34 in the up-down direction and the in-out direction is detected by the ECU 12 detecting the resistance values of the sliding resistances R as they change due to movement of the detection rods 46. Note that although the present exemplary embodiment is explained using an example of sensors employing sliding resistance, the sensors are not limited thereto, and, for example, application may be made using optical sensors.

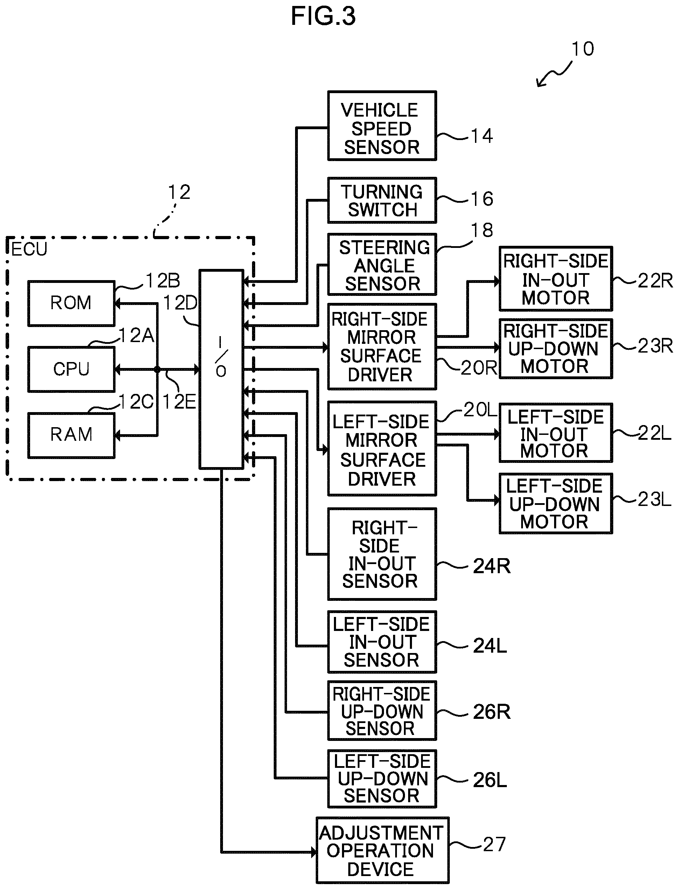

Fig. 3 is a block diagram illustrating configuration of a control system of a vehicle door mirror control device 10 according to the present exemplary embodiment.

The vehicle door mirror control device 10 is equipped with the ECU 12, as described above. The ECU 12 is configured by a microcomputer in which a CPU 12A, ROM 12B, RAM 12C, and an input/output interface (I/O) 12D, are connected together through a bus 12E.

A turning-coordinated mirror control program, described later, and various data, such as various tables, numerical formulae, and the like are stored in the ROM 12B. Control to move the mirror surface 36A of the mirror 34 in coordination with turning is performed by expanding the program stored in the ROM 12B into the RAM 12C, and by executing the expanded program using the CPU 12A. Note that in addition to the turning-coordinated mirror control program, programs such as one for performing mirror surface position detection processing and the like, described later, are also stored as programs stored in the ROM 12B.

A vehicle speed sensor 14, turning switches 16, and a steering angle sensor 18 are connected to the I/O 12D as detection sections. Moreover, a right-side mirror surface driver 20R, a left-side mirror surface driver 20L, a right-side in-out sensor 24R, a left-side in-out sensor 24L, a right-side up-down sensor 26R, a left-side up-down sensor 26L, and the adjustment operation device 27 described above are also connected to the I/O 12D.

The vehicle speed sensor 14 detects the travelling speed of the vehicle (referred to as the vehicle speed below), and inputs the detection results to the ECU 12.

The turning switches 16 are switches to instruct illumination of turn signals, and instructions to illuminate the left and right turn signals are input to the ECU 12. The ECU 12 is thereby able to determine an intention of an occupant to turn, based on the signals from the turning switches 16.

The steering angle sensor 18 detects the steering angle of the steering wheel (referred to as the steering angle below), and inputs the steering angle detection results to the ECU 12.

A right-side up-down motor 23R and a right-side in-out motor 22R are connected to the right-side mirror surface driver 20R, and the right-side up-down motor 23R and the right-side in-out motor 22R are driven according to instructions from the ECU 12. A left-side up-down motor 23L and a left-side in-out motor 22L are connected to the left-side mirror surface driver 20L, and the left-side up-down motor 23L and the left-side in-out motor 22L are driven according to instructions from the ECU 12.

The right-side in-out sensor 24R detects the tilt position of a right-side mirror 34 in the in-out direction, and the left-side in-out sensor 24L detects the tilt position of a left-side mirror 34 in the in-out direction. The detection results thereof are each input to the ECU 12. The right-side up-down sensor 26R detects the tilt position of the right-side mirror 34 in the up-down direction, the left-side up-down sensor 26L detects the tilt position of the left-side mirror 34 in the up-down direction. The detection results thereof are each input to the ECU 12. Specifically, the in-out sensor 24 and the up-down sensor 26 input the ECU 12 with voltage detection results corresponding to the resistance values of the sliding resistances R. Namely, due to the resistance values of the sliding resistances R changing according to the tilt position of the mirror 34, the tilt position of the mirror 34 is detected by the ECU 12 detecting, as the detection results, the resistance values of the sliding resistances R from the voltage.

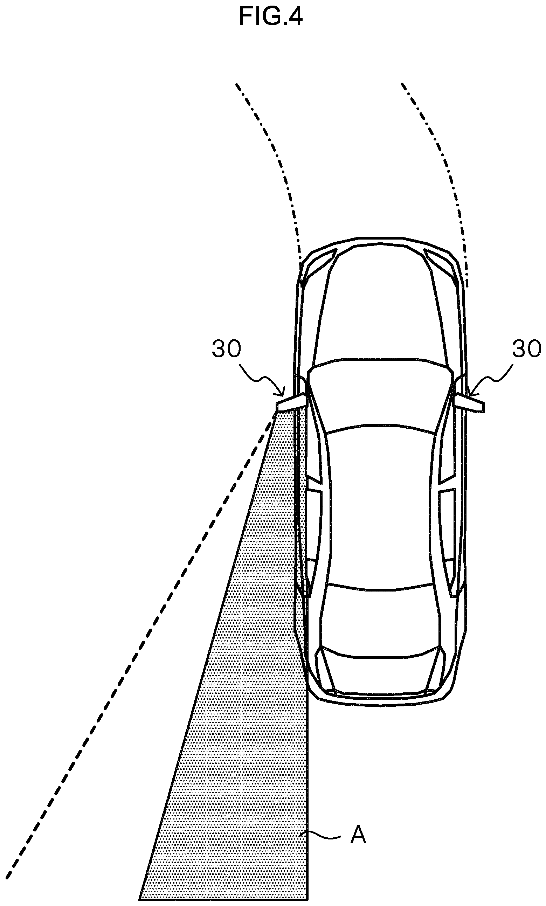

Explanation follows regarding the turning-coordinated mirror control performed in the vehicle door mirror control device 10 according to the present exemplary embodiment. Fig. 4 is a diagram to explain the turning-coordinated mirror control.

The turning-coordinated mirror control is performed by the ECU 12 executing the turning-coordinated mirror control program stored in the ROM 12B.

When performing a turn, such as a right turn or a left turn, the occupant checks the vehicle door mirror device 30 to check for interaction with a bicycle or the like. However, upon starting to turn, the range of vehicle surroundings that the occupant can visually recognize in the vehicle door mirror device 30 moves away from a region in which the subject to check for interaction with, such as a bicycle, is present as the vehicle turns.

Due to the checking subject thus moving out from the visual recognition range during vehicle turning, in the turning-coordinated mirror control, control is performed to tilt the mirror surface 36A of the mirror 34 in coordination with the vehicle turning so as to change the visual recognition range.

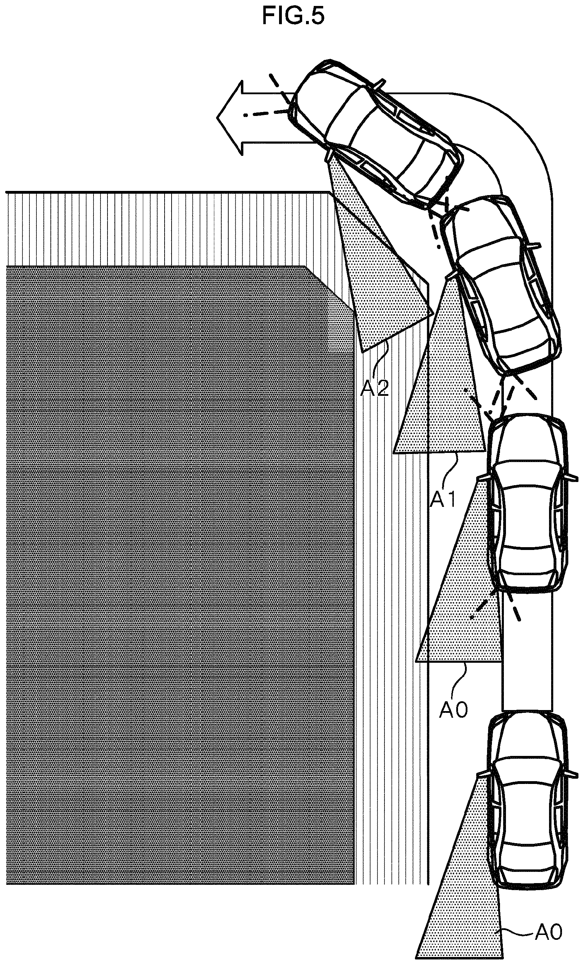

More specifically, in a normal state, such as a state of straight-ahead travel, as illustrated in Fig. 4, a region A of a visual recognition range is at a position for visual recognition that has been pre-set by the occupant. Then when turning, the turning amount is detected from the detection results from of vehicle speed sensor 14 and the steering angle sensor 18. The ECU 12 then controls driving of the in-out motor 22 so as to tilt the mirror surface 36A according to the detected turning amount, and to move the region A of the visual recognition range toward the direction of the broken line in Fig. 4. Thereby, as illustrated in Fig. 5, the visual recognition range is changed from a region A0, to regions A1, A2 according to the turning amount, enabling checking for interaction to be reliably performed during turning.

The conditions for changing the visual recognition range under the turning-coordinated mirror control may, for example, be when one of the turning switches 16 is ON, the vehicle speed is a predetermined threshold value or lower, and the steering angle is a predetermined threshold value or greater; however there is no limitation thereto. For example, detection results or the like from other sensors, such as an acceleration sensor or the like, may be employed as a condition for changing the visual recognition range.

Note that tilting of the mirror surface 36A according to the turning amount is controlled by pre-storing movement amounts of the mirror surface 36A associated with turning amounts in the ECU 12, and reading the movement amount corresponding to the turning amount.

In the turning-coordinated mirror control of the present exemplary embodiment, the in-out sensor 24 detects the position of the mirror surface for control of the mirror surface position, and it may be that noise is superimposed on the sensor detection values of the in-out sensor 24. For example, noise such as from running vibrations in the vehicle, or electrical noise from the motor or the like, may be superimposed thereon.

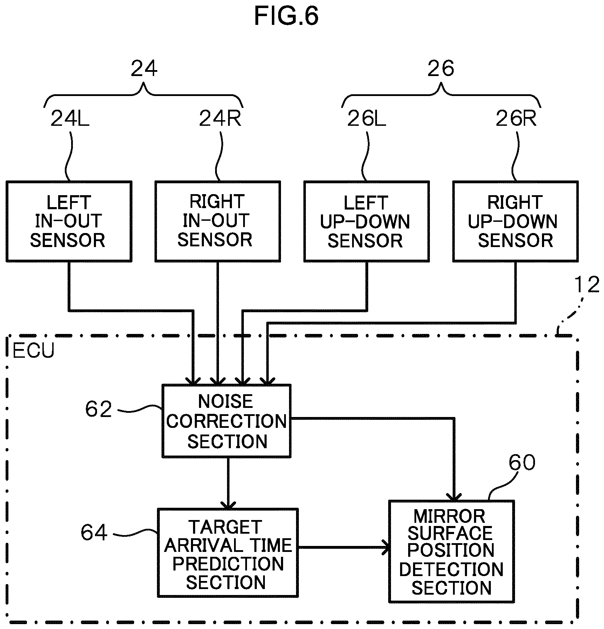

In the present exemplary embodiment, the ECU 12 is equipped with functionality to remove noise and correct detection values from the sensors. Fig. 6 is a functional block diagram illustrating the functionality of the ECU 12 to correct detection values from sensors.

The ECU 12 is equipped with the functionality of a noise correction section 62, serving as a correction section; a target arrival time prediction section 64, serving as a prediction section; and a mirror surface position detection section 60. Each of the functions of the ECU 12 may be functionality executed by a program, or may be functionality performed by hardware.

The noise correction section 62 acquires a detection value from each of the in-out sensor 24 and the up-down sensor 26, and using a detection value from a sensor not employed in turning-coordinated mirror control, corrects noise in the detection values from sensors employed in the turning-coordinated mirror control. Any of the sensors other than the in-out sensor 24 employed in the turning-coordinated mirror control may, for example, be applied as the sensor not employed in turning-coordinated mirror control. Alternatively, of the left and right up-down sensors 26, the up-down sensor 26 on the side where turning-coordinated mirror control is being performed may be applied. Alternatively, at least one of the in-out sensor 24 or the up-down sensor 26 on the side where turning-coordinated mirror control is not being performed may be applied. As the noise correction method, for example, noise is corrected by subtracting a detection value from a sensor not employed in turning-coordinated mirror control from the sensor detection value employed in turning-coordinated mirror control. Alternatively, in cases in which detection values from a sensor are computed using a moving average, noise may be corrected by increasing the number of samples in the moving average (for example, changing from three averages to six averages) when noise is detected by the sensor not employed in turning-coordinated mirror control. Alternatively, noise may be corrected by computing the frequency of a noise component in a detection value from a sensor not employed in turning-coordinated mirror control and removing this frequency.

The target arrival time prediction section 64 predicts the arrival time at a target position based on a distance from the mirror surface position detected by the mirror surface position detection section 52 to the target position, and on the operating speed of the in-out motor 22. In the present exemplary embodiment, for example, in cases in which the magnitude of noise is of a specific value or greater, the mirror surface position is predicted from a time predicted by the target arrival time prediction section 64 without relying on a detection value from a sensor.

The mirror surface position detection section 52 detects the mirror surface position by detecting the resistance values of the sliding resistances R as the detection results of the in-out sensor 24 and the up-down sensor 26. Namely, the mirror surface position is detected from the resistance values by pre-storing mirror surface positions in association with resistance values of the sliding resistances.

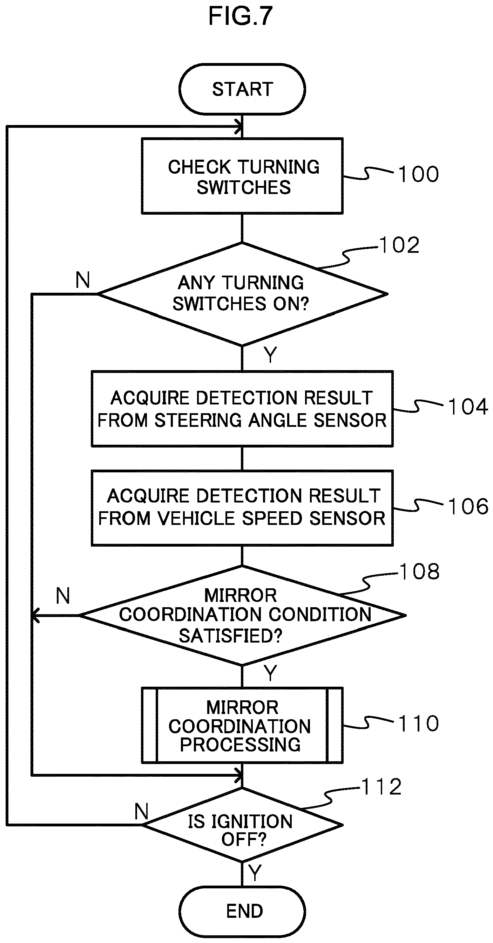

Next, explanation follows regarding specific processing performed by the ECU 12 of the vehicle door mirror control device 10 according to the present exemplary embodiment configured as described above. Fig. 7 is a flowchart illustrating an example of flow of processing performed by the ECU 12 of the vehicle door mirror control device 10 according to the present exemplary embodiment. Note that an example will be explained in which the processing of Fig. 7 is, for example, started when an ignition switch, not illustrated in the drawings, has been switched ON.

First, at step 100, the ECU 12 checks the operation state of the turning switches 16, and then processing transitions to step 102.

At step 102, the ECU 12 determines whether or not one of the turning switches 16 have been switched ON. Processing transitions to step 104 in cases in which determination is affirmative, and processing transitions to step 112 in cases in which determination is negative.

At step 104, the ECU 12 acquires a detection result from the steering angle sensor 18, and processing transitions to step 106.

At step 106, the ECU 12 acquires a detection result from the vehicle speed sensor 14, and processing transitions to step 108.

At step 108, the ECU 12 determines whether or not a mirror coordination condition has been satisfied based on the acquired detection results from both the steering angle sensor 18 and the vehicle speed sensor 14. Namely, the ECU 12 determines whether or not the vehicle speed is a predetermined coordination threshold value or lower, and whether or not the steering angle is a predetermined coordination threshold value steering angle β or greater. Processing transitions to step 110 in cases in which determination is affirmative, and processing transitions to step 112 in cases in which determination is negative.

At step 110, the ECU 12 performs mirror coordination processing, and processing transitions to step 112. In the mirror coordination processing, for example, the ECU 12 finds the turning amount from the detection results of the steering angle sensor 18 and the vehicle speed sensor 14, and controls driving of the in-out motor 22 so as to move the mirror surface 36A to a predetermined position according to the turning amount. Specifically, this control is control such that the greater the turning amount, the more the mirror surface 36A is moved toward the outside to enable visual recognition of a region at the outside. The movement of the mirror surface 36A stops at a predetermined target position.

At step 112, the ECU 12 determines whether or not the ignition switch has been switched OFF. Processing returns to step 100 and the above processing is repeated in cases in which determination is negative, and the processing routine is ended in cases in which determination is affirmative.

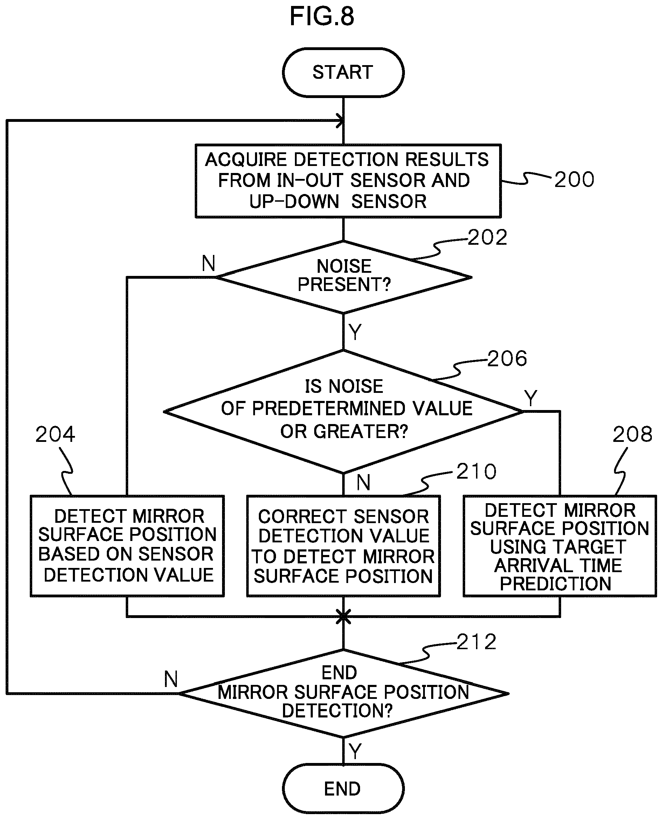

Explanation follows regarding mirror surface position detection processing performed by the ECU 12 when detecting a mirror surface position in the mirror coordination processing and the like performed at step 110 described above. Fig. 8 is a flowchart illustrating a flow of mirror surface position detection processing performed by the ECU 12 when detecting a mirror surface position in the vehicle door mirror control device according to the present exemplary embodiment. Note that the processing of Fig. 8 begins when detecting a mirror surface position.

When movement of the mirror surface 36A begins, at step 200, the noise correction section 62 acquires respective detection values from the in-out sensor 24 and the up-down sensor 26, and processing transitions to step 202.

At step 202, the noise correction section 62 determines whether or not noise is present. For this determination, for example, the noise correction section 62 determines whether or not fluctuation is present in detection values from a sensor not employed in the turning-coordinated mirror control, and processing transitions to step 204 in cases in which determination is negative, and processing transitions to step 206 in cases in which determination is affirmative.

At step 204, the mirror surface position detection section 60 detects the mirror surface position based on the sensor detection values, and processing transitions to step 212.

At step 206, the noise correction section 62 determines whether or not noise of a specific value or greater is present. Processing transitions to step 208 in cases in which determination is affirmative, and processing transitions to step 210 in cases in which determination is negative. Note that the specific value is a value that has been determined in advance at which sensor detection values are considered to be unreliable.

At step 208, the mirror surface position detection section 60 detects a mirror surface position based on a target arrival time computed by the target arrival time prediction section 64, and processing transitions to step 212. Namely, in cases in which noise is of the specific value or greater, a mirror surface position is predicted using a time predicted by the target arrival time prediction section 64 without relying on a detection value from a sensor. Note that in the present exemplary embodiment, in cases in which noise is of the specific value or greater, movement of the mirror surface 36A stops when the time predicted by the target arrival time prediction section 64 has been reached.

At step 210, the noise correction section 62 corrects the sensor detection value to detect the mirror surface position, and processing transitions to step 212. As the correction of the sensor detection value, for example, the noise correction section 62 may make the correction by subtracting the detected noise component from the detection value from the sensor employed in the turning-coordinated mirror control. Alternatively, the correction may be made by computing the frequency of a noise component and removing this frequency component. Alternatively, the sensor detection value may be computed using a moving average of detection values, and may be corrected by increasing the number of samples in the moving average (for example, changing from three averages to six averages).

At step 212, the ECU 12 determines whether or not to end the mirror surface position detection. For this determination, for example, the ECU 12 makes a determination as to whether or not a condition that the mirror coordination processing of step 110 is ended has been satisfied, and processing returns to step 200 and repeats in cases in which determination is negative, and the mirror surface position detection processing is ended when determination becomes affirmative.

In this manner, in the present exemplary embodiment, when performing turning-coordinated mirror control, correcting a detection value from a sensor detecting a mirror surface position using a detection value from a sensor not employed in the detection of the mirror surface position enables the reduction of noise due to vibration and of electrical noise. Further, controlling the mirror surface position with reduced noise enables the most appropriate field of view to be secured.

Further, in cases in which noise is of the specific value or greater, since a mirror surface position is detected using a target arrival time and without using a detection value from a sensor, erroneous detection of a mirror surface position due to the noise can be prevented. Further, since mirror surface position detection using a sensor is reverted to in cases in which the amount of noise has decreased, position detection using a sensor becomes possible.

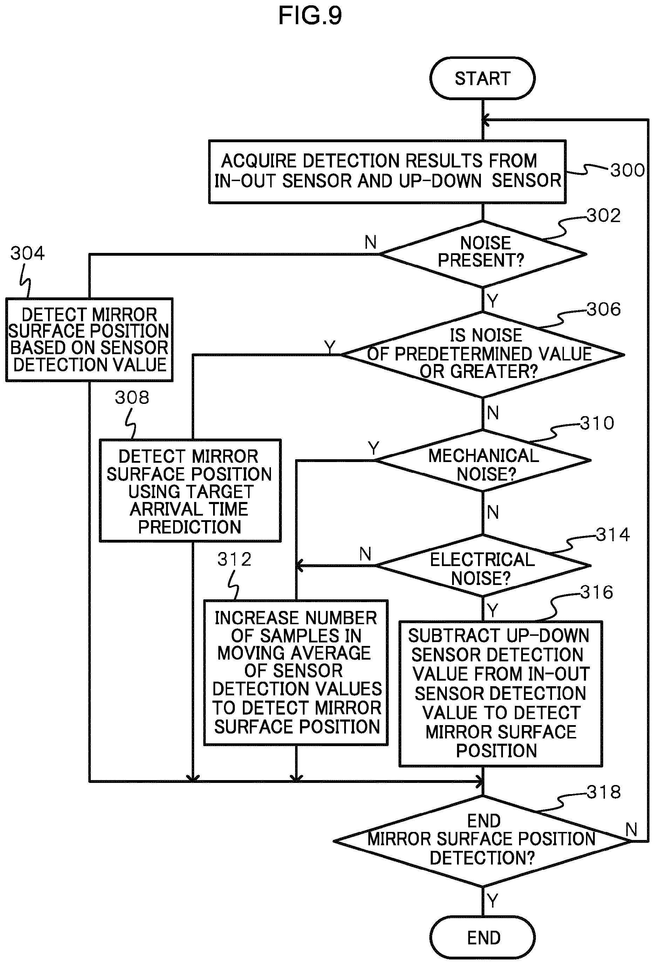

Explanation follows regarding a modified example of the mirror surface position detection processing described above. Fig. 9 is a flowchart illustrating a modified example of a flow of mirror surface position detection processing performed by the ECU 12 when detecting a mirror surface position in a vehicle door mirror control device according to the present exemplary embodiment. Note that the processing of Fig. 9 begins when detecting a mirror surface position.

When movement of the mirror surface 36A begins, at step 300, the noise correction section 62 acquires respective detection values from the in-out sensor 24 and the up-down sensor 26, and processing transitions to step 302.

At step 302, the noise correction section 62 determines whether or not noise is present. For this determination, for example, the noise correction section 62 determines whether or not fluctuation is present in detection values from a sensor not employed in the turning-coordinated mirror control, and processing transitions to step 304 in cases in which determination is negative, and processing transitions to step 306 in cases in which determination is affirmative.

At step 304, the mirror surface position detection section 60 detects the mirror surface position based on the sensor detection values, and processing transitions to step 318.

At step 306, the noise correction section 62 determines whether or not noise of a specific value or greater is present. Processing transitions to step 308 in cases in which determination is affirmative, and processing transitions to step 310 in cases in which determination is negative. Note that the specific value is a value that has been determined in advance at which sensor detection values are considered to be unreliable.

At step 308, the mirror surface position detection section 60 detects a mirror surface position based on a target arrival time computed by the target arrival time prediction section 64, and processing transitions to step 318. Namely, in cases in which noise is of the specific value or greater, a mirror surface position is predicted using a time predicted by the target arrival time prediction section 64 without relying on a detection value from a sensor. Note that in the present exemplary embodiment, in cases in which noise is of the specific value or greater, movement of the mirror surface 36A stops when the time predicted by the target arrival time prediction section 64 has been reached.

At step 310, the noise correction section 62 determines whether or not the detected noise is mechanical noise. For this determination, for example, in cases in which similar noise is present in all the sensors not employed in the turning-coordinated mirror control, it is conceivable that the noise is mechanical noise due to vibration or the like. Therefore, the noise correction section 62 determines whether or not similar noise is present in all the sensors not employed in the turning-coordinated mirror control. Processing transitions to step 312 in cases in which determination is affirmative, and processing transitions to step 314 in cases in which determination is negative. Note that the method of determining whether or not noise is mechanical noise is not limited to that described above, and determination may be made using other methods.

At step 312, the noise correction section 62 corrects the detection value by increasing the number of samples in a moving average of detection values from the sensor (for example, changing from three averages to six averages), the mirror surface position detection section 60 detects the mirror surface position based on the corrected detection value, and then processing transitions to step 318. Thereby, sudden noise, such as mechanical noise, is able to be suppressed.

At step 314, the noise correction section 62 determines whether or not the detected noise is electrical noise. For this determination, for example, in cases in which electrical noise from a motor or the like is present during turning-coordinated mirror control, when, of the sensors not employed in the turning-coordinated mirror control, noise is present in the up-down sensor 26 on the same side (on the side where turning-coordinated mirror control is being performed), it is conceivable that the noise is electrical noise from a motor or the like. Therefore, the noise correction section 62 determines whether or not, of the sensors not employed in the turning-coordinated mirror control, noise is superimposed only on the up-down sensor 26 on the same side. Processing transitions to step 312 mentioned above in cases in which determination is negative, namely in cases in which there is a mixture of mechanical noise and electrical noise, and processing transitions to step 316 in cases in which determination is affirmative. Note that the method of determining whether or not noise is electrical noise is not limited to that described above, and determination may be made using other methods.

At step 316, the noise correction section 62 subtracts the detection value from the up-down sensor 26 from the detection value from the in-out sensor 24 to remove the noise, the mirror surface position detection section 60 detects the mirror surface position based on the detection value from which noise has been removed, and then processing transitions to step 318. Thereby, electrical noise is able to be removed.

At step 318, the ECU 12 determines whether or not to end the mirror surface position detection processing. For this determination, for example, the ECU 12 makes a determination as to whether or not a condition that the mirror coordination processing of step 110 is ended has been satisfied, and processing returns to step 300 and repeats in cases in which determination is negative, and the mirror surface position detection processing is ended when determination becomes affirmative.

Note that although in the above exemplary embodiment, in cases in which noise is of the specific value or greater, the mirror surface position is predicted using a time predicted by the target arrival time prediction section 64 without relying on a sensor value, there is no limitation thereto. For example, configuration may be such that the processing of steps 206, 208 in Fig. 8 and steps 306, 308 in Fig. 9 is omitted.

Moreover, although the vehicle door mirror control device 10 is described as an example of the vehicular visual recognition control device in the exemplary embodiment described above, there is no limitation thereto. For example, application may be made to a configuration to control an internal rearview mirror or the like, instead of the vehicle door mirror device 30. Alternatively, application may be made to an imaging device such as a camera, instead of the vehicle door mirror device 30, with the imaging direction of the imaging device being driven in coordination with turning.

Moreover, in the above exemplary embodiment explanation has been given of a case in which conditions for changing the visual recognition range are detection of one of the turning switches 16 being ON, the vehicle speed being a specific vehicle speed or lower, and that steering angle being a specific steering angle or greater. However, navigation information or the like from a navigation unit may be included in the conditions for changing the visual recognition range. Alternatively, the conditions for changing may be detection of one of the turning switches being ON and the vehicle speed being a specific vehicle speed or lower, or may be detection of one of the turning switches being ON and the steering angle being a steering angle of a specific steering angle or greater.

Moreover, although in the above exemplary embodiment explanation has been given of an example in which the visual recognition range is changed in coordination with turning, there is no limitation thereto. For example, application may be made to cases in which the visual recognition range is changed in coordination with reversing. Alternatively, application may be made to cases involving movement to a predetermined mirror surface position. Alternatively, application may be made to cases in which the position of a visual recognition section configured by a mirror surface is changed by operation of a switch or the like while a mirror surface position is detected.

Further, although in the above exemplary embodiment explanation has been given of an example in which one ECU 12 controls the left and right vehicle door mirror devices 30, application may be made to cases in which separate ECUs 12 are provided on the left and right. In such cases, noise removal may not be possible if detection values from respective sensors on the left and right are not synchronized. Thus, in cases in which noise is detected by a sensor on the opposite side to the side where turning-coordinated mirror control is being implemented, a noise correction method may be applied in which noise detected by a sensor on one side is communicated to the other side, and the number of samples of a moving average is changed.

The present invention is not limited to the above description, and obviously, in addition to the above, various modifications may be implemented within a range not departing from the spirit of the present invention.

The entire disclosure of Japanese Patent Application No. 2015-172304 filed on September 1, 2015 is incorporated by reference in the present specification.

## Claims

1. A vehicular visual recognition control device comprising:
a plurality of detection sections that detect a position of visual recognition sections for visually recognizing vehicle surroundings; and
a correction section that, when employing any one of the plurality of detection sections to detect a position of the visual recognition sections, detects noise based on a detection result from the detection sections not being employed from among the plurality of detection sections and is configured to correct a detection result from the detection section being employed.

2. The vehicular visual recognition control device of claim 1, wherein:
the plurality of detection sections include:
a right-side up-down detection section that detects a vehicle up-down direction position of one of the visual recognition sections which is provided at a vehicle right side,
a right-side in-out detection section that detects a vehicle in-out direction position of the visual recognition section provided at the vehicle right side,
a left-side up-down detection section that detects a vehicle up-down direction position of one of the visual recognition sections which is provided at a vehicle left side, and
a left-side in-out detection section that detects a vehicle in-out direction position of the visual recognition section provided at the vehicle left side; and
the correction section, when detecting a position of the visual recognition sections using the right-side in-out detection section, detects noise based on a detection result from the right-side up-down detection section and corrects a detection result from the right-side in-out detection section, and when detecting a position of the visual recognition sections using the left-side in-out detection section, detects noise based on a detection result from the left-side up-down detection section and corrects a detection result from the left-side in-out detection section.

3. The vehicular visual recognition control device of claim 1, wherein:
the plurality of detection sections include:
a right-side up-down detection section that detects a vehicle up-down direction position of one of the visual recognition sections which is provided at a vehicle right side,
a right-side in-out detection section that detects a vehicle in-out direction position of the visual recognition section provided at the vehicle right side,
a left-side up-down detection section that detects a vehicle up-down direction position of one of the visual recognition sections which is provided at a vehicle left side, and
a left-side in-out detection section that detects a vehicle in-out direction position of the visual recognition section provided at the vehicle left side; and
the correction section, when detecting a position of the visual recognition section provided at the right side, detects noise based on at least one of the left-side up-down detection section or the left-side in-out detection section and corrects a detection result from the detection section detecting the position of the visual recognition section provided at the right side, and when detecting a position of the visual recognition section provided at the left side, detects noise based on at least one of the right-side up-down detection section or the right-side in-out detection section and corrects a detection result from the detection section detecting the position of the visual recognition section provided at the left side.

4. The vehicular visual recognition control device of any one of claim 1 to claim 3, wherein:
to correct a detection result of the detection section being employed, the correction section:
subtracts a detection result from the detection sections not being employed, from the detection result from the detection section being employed in cases in which fluctuation is present in detection results from the detection sections not being employed,
increases a number of samples of a moving average of detection results from the detection section being employed in cases in which fluctuation is present in detection results from the detection sections not being employed, or
detects a noise frequency in a detection result from the detection sections not being employed, and removes a detected frequency component from the detection result of the detection section being employed.

5. The vehicular visual recognition control device of any one of claim 1 to claim 4, further comprising:
a change section that changes the position of the visual recognition sections;
a controller that, in cases in which a predetermined condition for changing the position of one of the visual recognition sections has been satisfied, controls the change section so as to change the position of the one of the visual recognition sections to a predetermined target position based on a detection result from the detection sections; and
a prediction section that, in cases in which noise detected by the correction section is a specific value or greater, predicts an arrival time at the target position and predicts a position of the visual recognition section based on the predicted arrival time without the correction section performing a correction.
